# EUROPEAN PATENT APPLICATION

(11) **EP 2 924 886 A1**
(43) Date of publication of application: **30.09.2015**
(21) Application number: 15157995.0
(22) Date of filing: 06.03.2015
(51) Int. Cl.: H04B 7/04

(54) **Method of handling transmissions via beam sectors and related communication device**

(30) Priority: 27.03.2014 US 201461970912 P; 03.03.2015 US 201514636184
(71) Applicant: Acer Incorporated, New Taipei City 221 (TW)
(72) Inventor: Yen, Chia-Pang, 221 New Taipei City (TW)
(74) Representative: Becker Kurig Straus

(57) **Abstract**

A method of handling data transmissions via beam sectors for a network comprises allocating at least one first communication device to a first beam sector; receiving at least one first pilot transmitted by the at least one first communication device via the first beam sector; estimating at least one first channel according to the at least one first pilot; and performing at least one first transmission to the at least one first communication device via the first beam sector, after filtering the at least one first transmission according to the at least one first channel.

## Description

### Field of the Invention

The present invention relates to a method of handling transmissions via beam sectors and related communication device.

### Background of the Invention

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

The fifth generation (5G) is currently developed in 3GPP as an evolution of the LTE-A system, to provide services to a great number of communication devices simultaneously. Scenarios considered include massive machine connection (MMC) and ultra-dense network (UDN). An example of the MMC is internet-of-things (IoT), wherein 10-100 times of connected devices may be supported. The UDN is assumed for places where small dense cells are operated. For example, the places may be stadiums, shopping smalls, etc., where a great number of communication devices may perform transmissions and/or receptions simultaneously. Massive MIMO may be implemented at an eNB to serve the great number of communication devices simultaneously so as to meet the above needs, i.e., a great number of antennas are installed at the eNB. However, a great number of channels need to be estimated, when the great number of antennas are used.

On the other hand, the number of pilots that may be used for estimating the channels is limited due to the characteristics of the channels. More specifically, the number of pilots that may be transmitted at the same time is limited by the coherence time and the coherence bandwidth of the channels. Accordingly, the number of communication devices that may be supported by the massive MIMO is limited, and the performance gain of the massive MIMO is degraded. The limitation caused by the channels is also termed as a pilot contamination problem. The pilot contamination problem is even severe when multiple cells operate at the same time. For example, the number of communication devices supported by the massive MIMO is 20, when one cell is considered. The number of communication devices supported by the massive MIMO may be reduced to 5, if 4 cells are considered. That is, the cells share the same resource for transmitting the pilots, and the number of resources owned by one cell is reduced and the number of communication devices can be served in one cell is accordingly reduced.

Thus, how to serve a great number of communication devices while mitigating the pilot contamination problem is an important problem to be solved.

### Summary of the Invention

The present invention provides a method and related communication device for handling transmissions via beam sectors to solve the abovementioned problem.

This is achieved by a method and a communication device for handling the transmissions via the beam sectors according to the independent claims here below. The dependent claims pertain to corresponding further developments and improvements.

As will be seen more clearly from the detailed description following below, the claimed method of handling data transmissions via beam sectors for a network comprises allocating at least one first communication device to a first beam sector; receiving at least one first pilot transmitted by the at least one first communication device via the first beam sector; estimating at least one first channel according to the at least one first pilot; and performing at least one first transmission to the at least one first communication device via the first beam sector, after filtering the at least one first transmission according to the at least one first channel.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

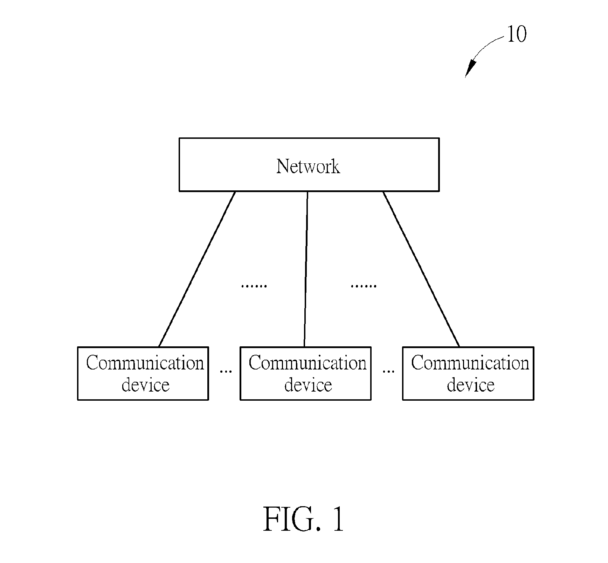

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. Practically, the network can be a universal terrestrial radio access network (UTRAN) comprising a plurality of Node-Bs (NBs) in a universal mobile telecommunications system (UMTS). In another example, the network can be an evolved UTRAN (E-UTRAN) comprising a plurality of evolved NBs (eNBs) and/or relays in a long term evolution (LTE) system, a LTE-Advanced (LTE-A) system or an evolution of the LTE-A system.

The network may be equipped with multiple antennas for perform a beamforming, to realize massive multiple-input multiple-output (MIMO) or time-reversal division multiple access (TRDMA). That is, beam sectors may be formed by the antennas according to the massive MIMO or the TRDMA. Energy of the signals (e.g., received signals and/or transmitted signals) may be separated and focused within corresponding beam sectors. The communication devices may be divided into multiple groups of communication devices, and each group of communication devices belongs to a corresponding one of the beam sectors. Thus, advantage of spatial focusing effect may be provided to the communication devices, when the massive MIMO or the TRDMA is operated. It should be noted that complexity of a communication device may be further reduced if the network performs a transmission to the communication device according to the TRDMA. For example, the communication device may need only one receive antenna to perform a reception from the network according to the TRDMA. According to the above description, multiple-user MIMO (MU-MIMO) is realized between the network and the communication devices

Furthermore, the network can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network.

A communication device can be a user equipment (UE), a low cost device (e.g., machine type communication (MTC) device), a mobile phone, a laptop, a tablet computer, an electronic book, a portable computer system, or combination thereof. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

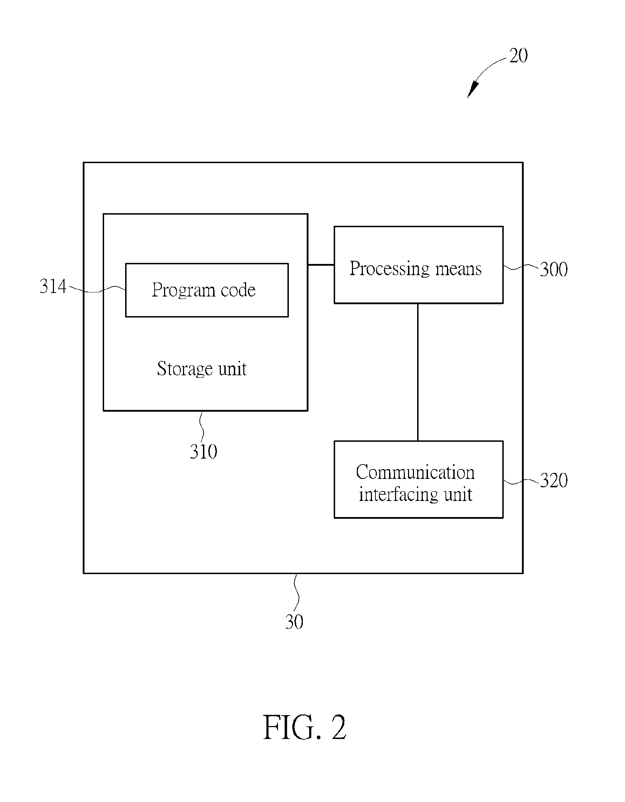

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

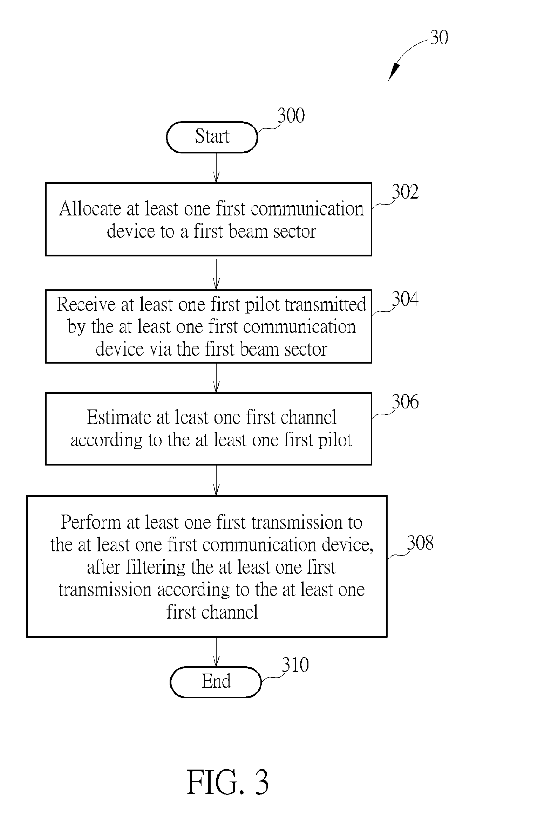

Fig. 3 is a flowchart of a process 30 according to an example of the present invention. The process 30 may be utilized in the network for handling transmission via beam sectors. The process 30 may be compiled into the program code 214 and includes the following steps:
- Step 300:: Start.
- Step 302:: Allocate at least one first communication device to a first beam sector.
- Step 304:: Receive at least one first pilot transmitted by the at least one first communication device via the first beam sector.
- Step 306:: Estimate at least one first channel according to the at least one first pilot.
- Step 308:: Perform at least one first transmission to the at least one first communication device via the first beam sector, after filtering the at least one first transmission according to the at least one first channel.
- Step 310:: End.

According to the process 30, the network allocates at least one first communication device to a first beam sector. Then, the network receives at least one first pilot (e.g., sounding reference signal (SRS)) transmitted by the at least one first communication device via the first beam sector, and the network estimates at least one first channel (i.e., obtains estimated channel(s)) according to the at least one first pilot. Accordingly, the network performs at least one first transmission (e.g., data and/or control information) to the at least one first communication device via the first beam sector, after filtering (e.g., prefiltering) the at least one first transmission according to the at least one first channel. That is, the at least one first communication device is allocated to the first beam sector, such that the at least one first pilot is able to be transmitted within the first beam sector and does not interfere with pilot(s) transmitted via other beam sector(s). Correspondingly, the at least one first pilot is not interfered by the pilot(s) transmitted via other beam sector(s). In addition, even though the estimated channel(s) is actually UL channel(s), the network uses the estimated channel(s) as DL channel(s) for filtering the transmission(s) to compensate the effects of the DL channel(s). Then, the filtered transmission(s) is performed. Thus, resources for transmitting pilots via different beam sectors can be reused, and the pilot contamination problem is mitigated.

According to the process 30, a space domain (i.e., angular domain) is introduced by using the beam sectors (i.e., beamforming) to increase the number of available resources for transmitting the pilots. In addition, a coherence bandwidth of a channel within a beam sector may be increased due to the beamforming. Thus, the number of resources for transmitting pilots is further increased. As a result, the pilot contamination problem is further mitigated. According to the above description, the performance gain of the massive MIMO and the TRDMA can be improved, and a great number of communication devices may be served by the network simultaneously.

Realization of the present invention is not limited to the above description.

In one example, the process 30 may be further used for another group of communication device(s) in addition to the at least one first communication device. In detail, the network may allocate at least one second communication device to a second beam sector. Then, the network receives at least one second pilot transmitted by the at least one second communication device via the second beam sector, and the network estimates at least one second channel according to the at least one second pilot. Accordingly, the network performs at least one second transmission to the at least one second communication device, after filtering the at least one second transmission according to the at least one second channel. In other words, the process 30 may be applied to multiple beam sectors for multiple groups of communication devices simultaneously. However, detailed operations for different beam sectors may not be the same, and can be performed according to design considerations and characteristics of the beam sectors.

In one example, the network may first receive at least one angular sounding signal transmitted by the at least one first communication device. Then, the network allocates the at least one first communication device to the first beam sector according to the at least one angular sounding signal. That is, the present example provides a method for the network to arrange the communication devices to corresponding beam sectors. Information included in the at least one angular sounding signal is not limited herein. For example, the at least one angular sounding signal may include at least one identification of the at least one first communication device (e.g., UE ID(s)). That is, the network may allocate a communication device to a beam sector according to the identification of the communication device.

In one example, the network may receive the at least one first pilot in at least one resource transmitted by the at least one first communication device via the first beam sector. The at least one resource may be identified by at least one time and at least one frequency, i.e., a resource may be a time-frequency resource (e.g., resource block). A method according to which the at least one resource is determined is not limited herein. For example, the at least one resource may be allocated (i.e., signaled, indicated) to the at least one first communication device by the network. That is, the network may coordinate communication devices within the same beam sector, e.g., to reduce interferences caused by transmissions of pilots. Accordingly, the pilots may be coordinated to be transmitted in a time-division multiplexing (TDM) way and/or a frequency-division multiplexing (FDM) way. In another example, the at least one resource may be determined randomly by the at least one first communication device. That is, the communication devices within the same beam sector may transmit the pilots according to their own decisions (e.g., randomly) without the coordination provided by the network. In another example, the at least one resource may be determined according to a function of at least one identification of the at least one first communication device (e.g., UE ID(s)) and at least one cell identification (e.g., cell ID(s)) via which the transmissions/receptions are performed.

The at least one first communication device preferably operates in a TDD mode. Accordingly, a UL channel estimated by using a pilot may be accurate enough for DL transmissions performed via a DL channel, if the UL channel is nearly the same as the DL channel, i.e., channel reciprocity of the TDD mode.

In one example, the first beam sector in the process 30 may be formed by a plurality of antennas of the network according to massive MIMO. The at least one first transmission may be formed performed via the first beam sector according to TRDMA.

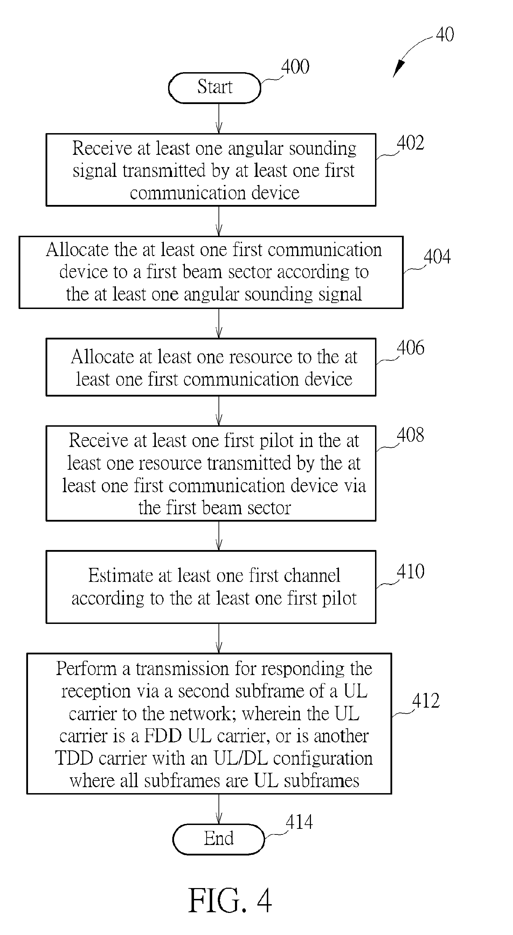

Fig. 4 is a flowchart of a process 40 according to an example of the present invention. The process 40 may be utilized in the network for handling transmissions via beam sectors, and is an example illustrated according to the above description. The process 40 may be compiled into the program code 214 and includes the following steps:
- Step 400:: Start.
- Step 402:: Receive at least one angular sounding signal transmitted by at least one communication device.
- Step 404:: Allocate the at least one communication device to a beam sector according to the at least one angular sounding signal.
- Step 406:: Allocate at least one resource for at least one pilot to the at least one communication device.
- Step 408:: Receive the at least one pilot in the at least one resource transmitted by the at least one communication device via the beam sector.
- Step 410:: Estimate at least one channel according to the at least one pilot.
- Step 412:: Perform at least one transmission to the at least one communication device via the beam sector, after filtering the at least one transmission according to the at least one channel.
- Step 414:: End.

Detailed operation of the process 40 can be referred to the previous description, and is not narrated herein.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a method of handling transmissions via beam sectors. Resources for transmitting pilots via different beam sectors can be reused, and the pilot contamination problem is mitigated. The performance gain of the massive MIMO and the TRDMA is improved, and a great number of communication devices can be served by the network simultaneously.

## Claims

1. A method of handling data transmissions via beam sectors for a network, **characterized by** the method comprising:
allocating at least one first communication device to a first beam sector (302);
receiving at least one first pilot transmitted by the at least one first communication device via the first beam sector (304);
estimating at least one first channel according to the at least one first pilot (306); and
performing at least one first transmission to the at least one first communication device via the first beam sector, after filtering the at least one first transmission according to the at least one first channel (308).

2. The method of claim 1, further comprising the steps of:
allocating at least one second communication device to a second beam sector;
receiving at least one second pilot transmitted by the at least one second communication device via the second beam sector;
estimating at least one second channel according to the at least one second pilot; and
performing at least one second transmission to the at least one second communication device via the second beam sector, after filtering the at least one second transmission according to the at least one second channel.

3. The method of any of claims 1-2, further comprising the steps of:
receiving at least one angular sounding signal transmitted by the at least one first communication device; and
allocating the at least one first communication device to the first beam sector according to the at least one angular sounding signal.

4. The method of claim 3, **characterized in that** the at least one angular sounding signal comprises at least one identification of the at least one first communication device.

5. The method of any of claims 1-3, **characterized in that** the network receives the at least one first pilot in at least one resource transmitted by the at least one first communication device via the first beam sector.

6. The method of claim 5, **characterized in that** the at least one resource is identified by at least one time and at least one frequency.

7. The method of any of claims 5-6, **characterized in that** the at least one resource is allocated to the at least one first communication device by the network.

8. The method of any of claims 5-7, **characterized in that** the at least one resource is determined randomly by the at least one first communication device.

9. The method of any of claims 5-8, **characterized in that** the at least one resource is determined according to a function of at least one identification of the at least one first communication device and at least one cell identification.

10. The method of any of claims 1-9, **characterized in that** the at least one first communication device operates in a time-division duplexing (TDD) mode.

11. The method of any of claims 1-10, **characterized in that** the first beam sector is formed by a plurality of antennas of the network according to massive multiple-input multiple-output (MIMO).

12. The method of any of claims 1-11, **characterized in that** the at least one first transmission is performed via the first beam sector according to time-reversal division multiple access (TRDMA).

13. A communication device (20) for handling data transmissions via beam sectors, **characterized by** the communication device comprising:
a storage unit (210) for storing instructions of:
allocating at least one communication device to a beam sector (302);
receiving at least one pilot transmitted by the at least one communication device via the beam sector (304);
estimating at least one channel according to the at least one pilot (306); and
performing at least one transmission to the at least one communication device via the beam sector, after filtering the at least one transmission according to the at least one channel (308); and
a processing means (200), coupled to the storage unit (210), configured to execute the instructions stored in the storage unit (210).

14. At least one processor configured to handle data transmissions via beam sectors, **characterized by** the at least one processor comprising:
a first module for causing the at least one processor to allocate at least one communication device to a beam sector (302);
a second module for causing the at least one processor to receive at least one pilot transmitted by the at least one communication device via the beam sector (304);
a third module for causing the at least one processor to estimate at least one channel according to the at least one pilot (306); and
a fourth module for causing the at least one processor to perform at least one transmission to the at least one communication device via the beam sector, after filtering the at least one transmission according to the at least one channel (308).
